# EUROPEAN PATENT SPECIFICATION

(11) **EP 0 434 872 B1**
(45) Date of publication and mention of the grant of the patent: **20.07.1994**
(21) Application number: 89313635.8
(22) Date of filing: 28.12.1989
(51) Int. Cl.: G06F 15/62, H04N 5/32

(54) **Energy difference image processing method**
Energiedifferenz-Bildverarbeitungsverfahren
Procédé de traitement d'images à différence d'énergies

(43) Date of publication of application: 03.07.1991
(73) Proprietor: MATSUSHITA ELECTRIC INDUSTRIAL CO., LTD., Kadoma-shi, Osaka-fu, 571 (JP)
(72) Inventor: Tsutsui, Hiroshi, Yawata-shi (JP); Ohmori, Koichi, Toyonaka-shi (JP); Ohtsuchi, Tetsuro, Abeno-ku, Osaka-shi (JP); Baba, Sueki, Suita-shi (JP); Watanabe, Masanori, Katano-shi (JP)
(74) Representative: Votier, Sidney David

(56) References cited:
- US-A- 4 506 327
- PATENT ABSTRACTS OF JAPAN, vol. 12, no. 71, 17th September 1987, page 673;& JP-A-62 211 549 (MATSUSHITA ELECTRIC IND. CO.) 17-09-1987
- IEEE TRANSACTIONS ON MEDICAL IMAGING, vol. 7, no. 3, September 1988, pages 218-224, IEEE, New York, US; W.A. KALENDER et al.: "An algorithm for noisesuppression in dual energy CT material density images"
- JP-A-62 211 549 and its translation in english language

## Description

### BACKGROUND OF THE INVENTION

The present invention relates to a method of processing an image in an X-ray diagnosing device used in medical treatment or in non-destructive examination used in industries.

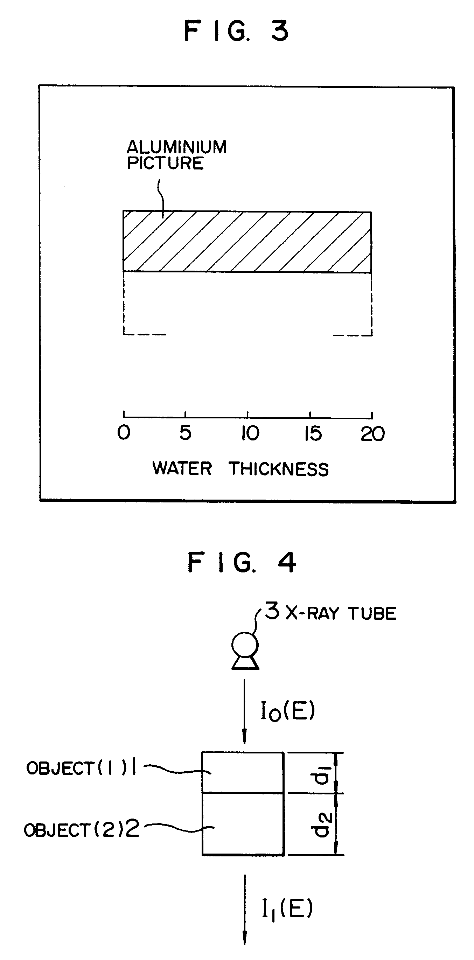

FIG. 4 illustrates attenuation of X-rays caused when the X-rays transmit through objects. The intensities of the X-rays I₁ (E) transmitting through objects (1)1 and (2)2 having a thickness of d₁ and d₂, respectively, are given by

${\text{I₁(E) = Iφ(E) exp {-µ}}_{\text{A}} {\text{(E)d₁ µ}}_{\text{B}} \text{(E)d₂} (1)}$

where I₀(E) is the intensity of the X-rays output from an X-ray tube 3, µ_{A}(E) and µ_{B}(E) are the attenuation coefficients of the objects (1)1, (2)2, respectively.

If we divide the energy E of the X-rays into two zones Low and High, and logarithmically convert both sides of each of those zones, we obtain the following:

${\text{-ℓnI′(Low) = µ}}_{\text{A}} {\text{(Low)d₁ + µ}}_{\text{B}} \text{(Low)d₂ (2)}$

${\text{-ℓnI′(High) = µ}}_{\text{A}} {\text{(High)d₁ + µ}}_{\text{B}} \text{(High)d₂ (3)}$

$\text{I′(Low) = I(Low)/Iφ(Low)}$
$\text{I′(High) = I(High)/Iφ(High)}$

Rewriting equation (2) and (3), using -ℓnI′(Low) = S(Low) and -ℓnI′(High) = S(High), we obtain

${\text{S(Low) = µ}}_{\text{A}} {\text{(Low)d₁ + µ}}_{\text{B}} \text{(Low)d₂ (4)}$

${\text{S(High) = µ}}_{\text{A}} {\text{(High)d₁ + µ}}_{\text{B}} \text{(High)d₂ (5)}$

Solving equations (4) and (5) with respect to d₁ and d₂, we obtain

${\text{d₁ = 1/Δx{µ}}_{\text{B}} {\text{(High)S(Low) - µ}}_{\text{B}} \text{(Low)S(High)} (6)}$

${\text{d₂ = 1/Δx{-µ}}_{\text{A}} {\text{(High)S(Low) + µ}}_{\text{A}} \text{(Low)S(High)} (7)}$

The attenuation coefficients are values inherent to the materials of the objects. Thus if we rewrite equations (6) and (7) as functions of S(Low) and S(High) using coefficients a₁ - a₄, then we obtain

$\text{d₁ = a₁s(Low) + a₂S(High) (8)}$

$\text{d₂ = a₃s(Low ) + a₄S(High) (9)}$

Equations (8) and (9) will be described using an X-ray transmission picture. Only picture components corresponding to the thickness of a specific object can be extracted from the X-ray transmission picture as a linear function of a logarithmic conversion version of the X-ray transmission picture. This method is illustrated in the following reference as energy subtraction method (differential method):
Ishida, "Hardware and Software for Picture Processing", Japanese Journal of Medical Electronics and Biological Engineering Vol. 22, No. 1, P. 53.

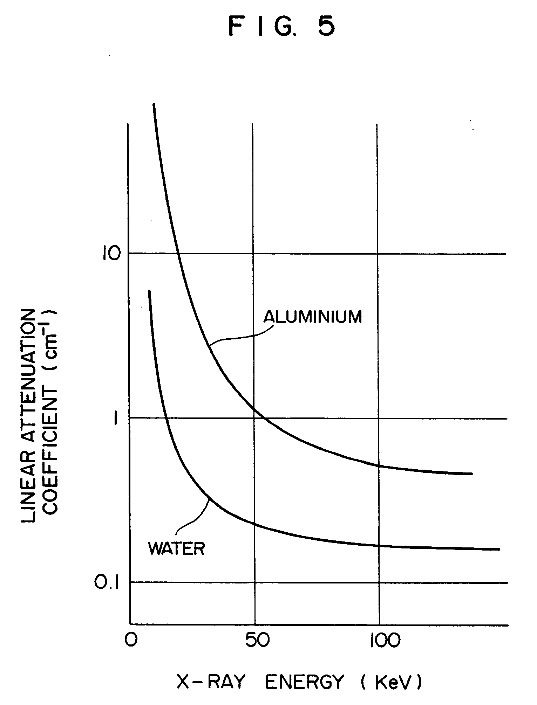

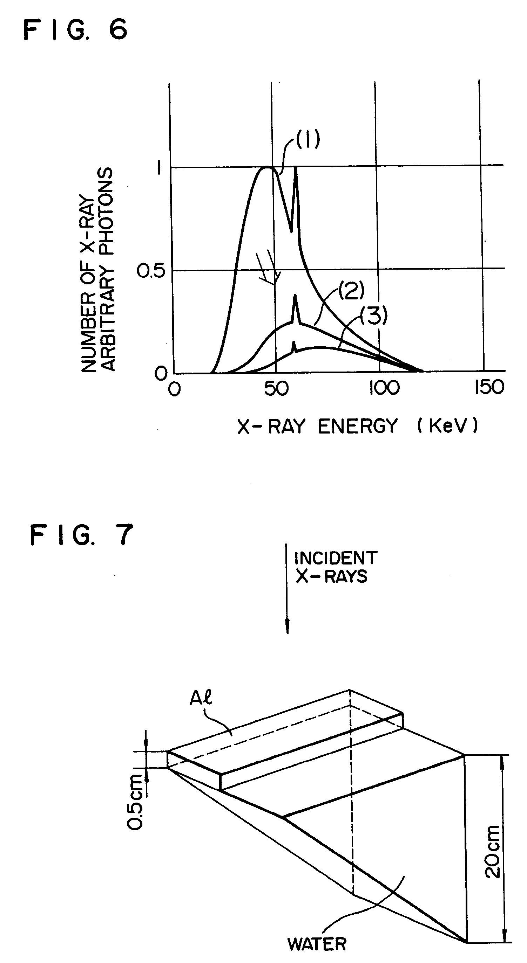

The above method will now be described in a practical field. As an example, assume that the objects (1) and (2) are aluminium and water, respectively. FIG. 5 illustrates the inner attenuation coefficients µ of aluminium and water. As will be seen in FIG. 5, the respective coefficients are non-linear with the X-ray energy, and rapidly increase toward the lower-energy side, which increase influences the X-ray spectrum, as shown in FIG. 6, in which the axis of ordinates indicates the X-ray photons, the curve (1) indicates the X-ray spectrum emitted from a regular source of X-rays at a tube voltage of 120 KVₚ and the curves (2) and (3) indicate changes in the X-ray spectra transmitted through objects when the thickness of the object increases. As will be understood in FIG. 6, as the thickness of the object increases, the object absorbs more of the lower energy X-rays and the average energy of the transmitted X-ray spectrum shifts toward the higher energy side, which is referred to as beam-hardening.

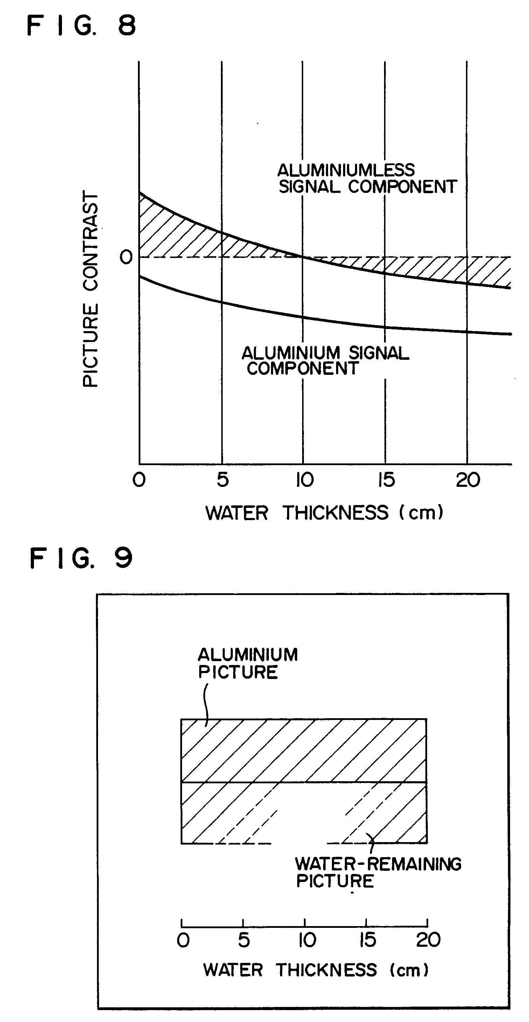

Energy subtraction, illustrated in equations (8) and (9) in a field where such beam hardening occurs, will be applied in actual irradiation. FIG. 7 shows the shape of objects (1) and (2) used in experiments where the objects (1) and (2) are an aluminium strip 0.5 cm thick and water body 20 cm high and the direction of X-ray irradiation incident on the objects. Such objects were irradiated with X-rays at an X-ray tube voltage of 120 KVₚ and a semiconductor radiation detector was used to scan the objects to thereby obtain transmitted pictures. The signals from the detector are separated with discriminating levels at 20 and 60 KeV. The logarithmic converted values of picture signals in 20 - 60 KeV and in 60 - 120 KeV are represented by S(Low) and S(High), respectively. The value of coefficient a was determined such that a picture of aluminium alone, namely, a picture where a water picture is erased, is obtained. The values of a₁ and a₂ used to obtain the aluminium d₁ picture using equation (8) are as follows:
a₁ = 1
a₂ = -1.13
FIG. 8 shows the remainder of water signal component contained in the aluminiumless picture and an aluminum picture signal component with the thickness of water, obtained in that case. If water is erased at a water thickness of 10 cm, the water signal component is null at that water thickness. The thickness of water increases or otherwise decreases, the remaining water signal component will be contained in the resulting picture. This is noticeable especially when water is thin. The aluminium component has an uniform contrast difference obtained as the difference between the aluminium component and remaining water components all over the cross-section region of water. This is illustrated as an actual picture in FIG. 9 in which a water picture disappeared completely from the image screen in the vicinity of a water thickness of 10 cm and the aluminium picture alone is extracted. In a region where the water thickness is smaller or otherwise larger, the remaining water picture component appears.

As described above, the energy subtraction method cannot make an ideal subtraction over the entire cross-section regions of the objects if the thickness of the objects change using the difference of logarithmic conversion pictures alone, as in the converting techniques.

Other prior art methods are known from I.E.E.E. Transactions on Medical Imaging, Vol. 7, No. 3, September 1988, pages 218-224, W.A. KALENDER et al: "An Algorithm for Noise Suppression in Dual Energy CT Material Density Images" and JP-A-62211549.

The energy difference picture processing method according to the invention is defined in claim 1.

By providing a higher-order term, the remaining picture due to the beam hardening of the X-rays is eliminated to thereby provide an optimal energy subtraction picture from the X-ray transmission picture of an object having a changing thickness.

Specific embodiments of the present invention are now described, by way of example only, with reference to the accompanying drawings, in which;-
FIG. 1 illustrates higher and lower energy signal components contained in a logarithmic conversion picture;
FIG. 2 illustrates an aluminium signal component obtained by the picture processing according to the present invention;
FIG. 3 illustrates an aluminium picture obtained by picture processing according to the present invention;
FIG. 4 illustrates a model of objects through which X-rays have passed;
FIG. 5 illustrates the linear attenuation coefficients of water and aluminium;
FIG. 6 illustrates the spectrum of an X-ray;
FIG. 7 illustrates models of water and aluminium used in experiment;
FIG. 8 illustrates the aluminium signal component obtained by conventional picture processing techniques; and
FIG. 9 illustrates the aluminium picture obtained by the conventional picture processing techniques.

### DESCRIPTION OF THE PREFERRED EMBODIMENTS

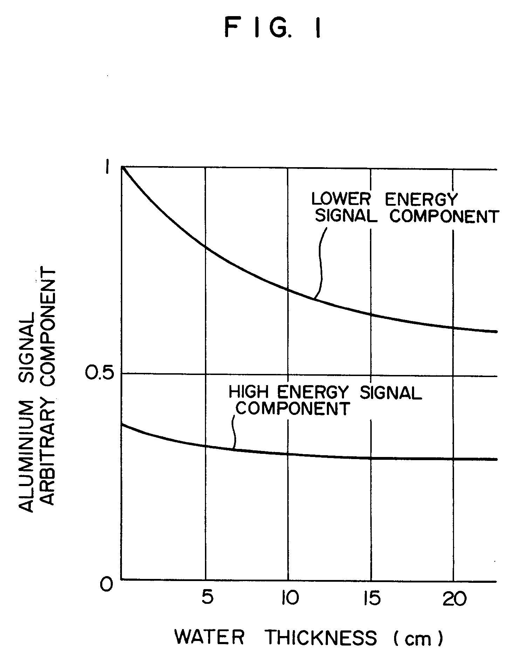

FIG. 1 illustrates the results of examination of changes in the signal components due to beam hardening using objects of FIG. 7. FIG. 1 illustrates a change in the aluminum signal component with a change in the thickness of water. A lower energy signal component is the signal component of a picture comprising an aluminiumless transmission picture minus an aluminium transmission picture in the picture S(Low). A higher energy signal component is a picture signal component obtained similarly using a picture S(High). As described above, the signal component changes non-linearly depending on the thickness of water, so that it will be seen that an optical picture cannot be obtained by using linear expressions (8) and (9).

In order to obtain a signal component changing linearly with a change in the thickness of water from a non-linear signal component shown in FIG. 1, terms {S(High)}^{x} and {S(Low)}^{y} are added to the equations (8) and (9) as follows:

$\text{d₁ = a₁S(Low) + a₂S(High)}$
${\text{+ a₅{S(Low)}}}^{\text{y}} {\text{+ a₆{S(High)}}}^{\text{x}} \text{(10)}$

$\text{d₂ = a₃S(Low) + a₄S(High)}$
${\text{+ a₇{S(Low)}}}^{\text{y}} {\text{+ a₈{S(High)}}}^{\text{x}} \text{(11)}$

In experiment, the values of x and a₁ - a₈ satisfying the optimal conditions of the above equations for incident X-rays at a tube voltage of 120 KVₚ are calculated.

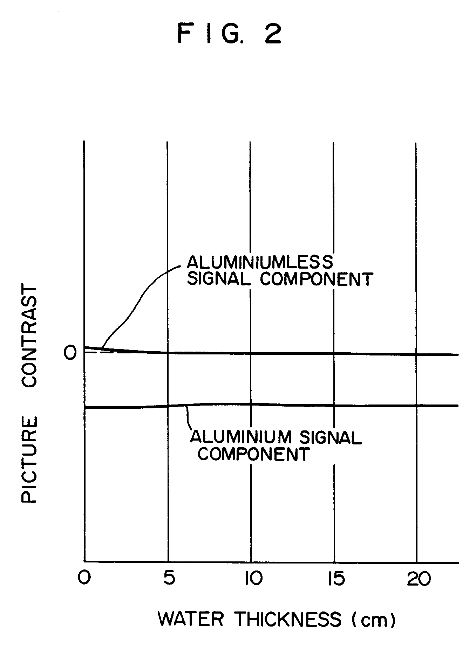

The values of a₁, a₂, a₅, a₆, x and y used to obtain the aluminium d₁ picture using equation (10) were as follows which were determined such that only the aluminium picture was obtained similarly at a water thickness of 10 cm also in this case:
a₁ = -1
a₂ = 1.5
a₅ = 0.2
a₆ = 0.05
x = 1.9
y = 1.9
FIG. 2 illustrates the contrast of the aluminium picture obtained using the above parameters. Compared to FIG. 8, the aluminiumless signal component has a uniform contrast over a water thickness of 0 - 20 cm.

Similarly, the values of a₃, a₄, a₇, a₈, x and y used to obtain the water d₂ picture using equation (1) are as follows:
a₃ = 1,
a₄ = -1.05,
a₇= -0.15,
a₉ = 0.05,
x = 1.9,
y = 1.9.

If processing is performed using these parameters, only a water picture substantially free from aluminium is obtained. If a₉ · S(High) · S(Low) and a₁₀ · S(High) · S(Low) are added to equations (10) and (11), respectively, finer correction is possible.

The above data was obtained by measurement using cadmium tellurides and an X-ray slit to eliminate scattered X-rays to the utmost.

While the above refers to the separation of water and aluminium, the inventive concept may be applicable to objects which differ in X-ray absorption coefficient. For example, if the object is a living body, the concept may be applicable to the separation of a bone, a soft tissue, a projected blood vessel or a calcified tissue. The concept is applicable to the separation of metal and a resin.

A semiconductor radiation sensor used for photographing should be able to measure the spectrum of silicon, germanium, gallium arsenide, cadmium tellurides or mercury iodide.

According to the present invention, a distortion of a picture contrast caused by beam hardening when the logarithmically converted versions of pictures in separated higher and lower energy regions and then separated pictures of substance using subtraction method are obtained is eliminated by adding, to the terms indicative of the logarithmically converted pictures, terms of higher degrees than those indicative of the logarithmically converted pictures during subtraction to thereby provide a distortionless picture.

By using the semiconductor in a spectroscopic manner, higher and lower energy pictures are obtained simultaneously by single X-ray exposure, which is an effective process for photographing a moving object.

## Claims

1. An energy subtraction picture processing method including the steps of:
using a semiconductor radiation detector for providing X-Ray transmission pictures;
providing two discrimination levels by
dividing energy of X-rays into two energy bands;
obtaining X-ray penetration pictures from said semiconductor radiation detector for said two energy bands directly counting photons of X-rays which penetrate an object constituted of a plurality of components in a predetermined measuring manner;
providing a logarithmic conversion picture S(High) derived from a ratio of an intensity data I(High) obtained from a counted value in a high energy band relative to an X-ray intensity I₀ (High) from an X-ray source in the high energy band, and providing a logarithmic conversion picture S(Low) derived from a ratio of an intensity data I(Low) obtained from a counted value in a low energy band relative to an X-ray intensity I₀ (Low) from the X-ray source in the low energy band as indicated below,
$\text{S(High) = -ℓn {I(High)/I₀(High)}}$
$\text{S(Low) = -ℓn {I(Low)/I₀(Low)}; and}$
subtracting and adding S(High) and S(Low) as indicated above to provide, at a particular component cross section value, a picture obtained by selectively extracting or cancelling a particular component from said plurality of components constituting said object, characterized by comprising the steps of;
obtaining a depth d₁ and d₂ of two different components of said object by adding or subtracting S(High), S(Low), {S(High)}^{x} and {S(Low)}^{y} as indicated below,
${\text{d₁ = a₁ S(Low) + a₂ S(High) + a₅{S(Low)}}}^{\text{y}} {\text{+ a₆{S(High)}}}^{\text{x}}$
${\text{d₂ = a₃ S(Low) + a₄ S(High) + a₇{S(Low)}}}^{\text{y}} {\text{+ a₈{S(High)}}}^{\text{x}}$
where {S(High)}^{x} and {S(Low)}^{y} are exponential functions of S(High) and S(Low), and x, y, a₁, a₂, a₃, a₄, a₅, a₆, a₇ and a₈ are coefficients, satisfying, an optimum linearity condition; and
displaying a value of the depth thus obtained as image data to provide a picture in which only a particular component is displayed or cancelled from said plurality of components constituting said object over the entire cross-section regions of said two different components.

## Patentansprüche

1. Energiesubtraktions-Bildverarbeituhgsverfahren mit folgenden Schritten;
Verwenden eines Halbleiterstrahlungsdetektors zum Schaffen von Röntgenstrahl-Transmissionsbildern;
Schaffen von zwei Diskriminationspegeln durch Teilen von Röntgenstrahlenenergie in zwei Energiebänder;
Erhalten von Röntgen-Durchtrittsbildern von dem Halbleiterstrahlungsdetektor für die beiden Energiebänder, wobei eine direkte Zählung von Photonen von Röntgenstrahlen erfolgt, die ein aus einer Vielzahl Komponenten zusammengesetztes Objekt durchdringen, und zwar in einer vorbestimmten Meßweise;
Schaffen eines logaritmischen Konversionsbildes S (High) , das abgeleitet ist von einem Verhältnis von aus einem gezählten Wert in einem Hochenergieband gewonnenen Intensitätsdaten I(High) zu einer Röntgenstrahlintensität I₀ (High) Von einer Röntgenstrahlenquelle in dem Hochenergieband, und Schaffen eines logarithmischen Konversionsbildes S (Low), das abgeleitet ist von einem Verhältnis von aus einem gezählten Wert in einem Niederenergieband gewonnenen Intensitätsdaten I(Low) zu einer Röntgenstrahlintensität I₀ Röntgenstrahlenquelle in dem Niederenergieband, wie nachstehend angegeben
$\text{S(High) = -} \text{l} \text{n {I(High)/I₀(High)}}$
$\text{S(Low) = -} \text{l} \text{n {I(Low)/I₀(Low)}; und}$
Subtrahieren und Addieren von S(High) und S(Low) wie oben angegeben, um bei einem bestimmten Komponentenquerschnittswert ein Bild zu schaffen, das erhalten wird durch selektives Extrahieren oder Eliminieren einer bestimmten Komponente von der Vielzahl das Objekt bildender Komponenten,
gekennzeichnet durch folgende Schritte:
Gewinnen einer Tiefe d₁ und d₂ zweier unterschiedlicher Komponenten des Objekts durch Addieren oder Subtrahieren von S(High), S(Low), {S(High)}^{x} und {S(Low)}^{y} wie nachstehend angegeben
${\text{d₁ = a₁ S(Low) + a₂ S(High) + a₅{S(Low)}}}^{\text{y}} {\text{+ a₆{S(High)}}}^{\text{x}}$
${\text{d₂ = a₃ S(Low) + a₄ S(High) + a₇ {S(Low)}}}^{\text{y}} {\text{+ a₈{S(High)}}}^{\text{x}}$
wobei {S(High)}^{x} und {S(Low)}^{y} Exponentialfunktionen von S(High) und S(Low) sind und x, y, a₁, a₂, a₃, a₄, a₅, a₆, a₇ sowie a₈ Koeffizienten sind, die eine Optimal-Linearitäts-Bedingung erfüllen; und
Anzeigen eines Wertes der so gewonnenen Tiefe als Bilddaten, um ein Bild zu schaffen, bei dem nur eine bestimmte Komponente der Vielzahl derjenigen Komponenten angezeigt oder eliminiert wird, die das Objekt bilden, und zwar über die gesamten Querschnittsbereiche der beiden unterschiedlichen Komponenten.

## Revendications

1. Procédé de traitement d'image par soustraction d'énergies incluant les étapes consistant :
à utiliser un détecteur de rayonnements à semi-conducteur pour fournir des images par transmission de rayons X;
à fournir deux niveaux de discrimination en divisant l'énergie des rayons X en deux bandes d'énergie;
à obtenir des images par pénétration de rayons X à partir dudit détecteur de rayonnements à semi-conducteur pour les deux bandes d'énergie;
à compter directement les photons des rayons X qui pénètrent un objet constitué d'une pluralité de composants selon un mode de mesure prédéterminé;
à fournir une image de conversion logarithmique S(Haut) qui est produite à partir du rapport entre une donnée d'intensité I(Haut), obtenue à partir d'une valeur du comptage dans une bande d'énergie haute, et une intensité I₀(Haut) des rayons X provenant d'une source de rayons X dans la bande d'énergie haute, et à fournir une image de conversion logarithmique S(Bas) qui est produite à partir du rapport entre une donnée d'intensité I(Bas), obtenue à partir d'une valeur du comptage dans une bande d'énergie basse, et une intensité I₀(Bas) des rayons X provenant d'une source de rayons X dans la bande d'énergie basse, comme cela est indiqué ci-dessous,
$\text{S(Haut) = -ln{I(Haut) / I₀(Haut)}}$
$\text{S(Bas) = -ln{I(Bas) / I₀(Bas)};}$
à soustraire et additionner S(Haut) et S(Bas), tels que définis ci-dessus, pour fournir, pour une valeur particulière de section transversale d'un composant, une image obtenue en extrayant de manière sélective ou en éliminant un composant particulier de ladite pluralité de composants constituant ledit objet, caractérisé par le fait qu'il comprend les étapes consistant :
à obtenir la profondeur d₁ et la profondeur d₂ de deux composants différents dudit objet en ajoutant ou soustrayant S(Haut), S(Bas), {S(Haut)}^{x} et {S(Bas)}^{y} comme cela est indiqué ci-dessous,
${\text{d₁ = a₁ S(Bas) + a₂ S(Haut) + a₅ {S(Bas)}}}^{\text{y}} {\text{+ a₆ {S(Haut)}}}^{\text{x}}$
${\text{d₂ = a₃ S(Bas) + a₄ S(Haut) + a₇ {S(Bas)}}}^{\text{y}} {\text{+ a₈ {S(Haut)}}}^{\text{x}}$
où {S(Haut)}^{x} et {S(Bas)}^{y} sont des fonctions exponentielles de S(Haut) et de S(Bas), et x, y, a₁ , a₂, a₃, a₄, a₅, a₆, a₇ et a₈ sont des coefficients satisfaisant une condition de linéarité optimale; et
à visualiser une valeur de la profondeur ainsi obtenue à titre de donnée d'image pour fournir une image dans laquelle seul un composant particulier est visualisé ou éliminé de ladite pluralité de composants constituant ledit objet sur des régions entières de la section transversale des deux composants différents.
